# NEW EUROPEAN PATENT SPECIFICATION

(11) **EP 2 593 769 B2**
(45) Date of publication and mention of the opposition decision: **30.08.2023**
(45) Mention of the grant of the patent: 29.04.2020
(21) Application number: 11731361.9
(22) Date of filing: 13.07.2011
(51) Int. Cl.: G01N 1/40, B01D 63/08

(54) **NEW LIQUID PROCESSING DEVICE**
NEUE FLÜSSIGKEITSVERARBEITUNGSVORRICHTUNG
NOUVEAU DISPOSITIF POUR LE TRAITEMENT DES LIQUIDES

(30) Priority: 14.07.2010 EP 10007274
(43) Date of publication of application: 22.05.2013
(73) Proprietor: Qiagen GmbH, 40724 Hilden (DE)
(72) Inventor: MÜLLER, Markus, 41542 Dormagen (DE); HIESINGER, Margit, 42117 Wuppertal (DE)
(74) Representative: f & e patent
(86) International application number: PCT/EP2011/061956
(87) International publication number: WO 2012/007504

(56) References cited:
- EP-A1- 1 990 641
- EP-A1- 2 486 657
- WO-A1-00/12675
- WO-A1-2008/150779
- WO-A1-2009/157435
- WO-A2-01/94574
- WO-A2-2004/080597
- WO-A2-2006/079814
- DE-A1- 2 125 027
- US-A- 5 364 533
- US-A1- 2006 180 548
- US-A1- 2008 300 397
- US-B1- 6 251 660

## Description

The present invention refers to a device, comprising a hollow body having at least one open end and at least one barrier inside of the hollow body, which is non-permeable for liquids and solids under ambience conditions, however, becomes irreversibly liquid-permeable by applying an external force like pressure, drag force or driving power to said barrier, wherein said barrier is spaced from at least one open end of the hollow body, the use of such a device for processing of a liquid sample, a method for preparation of said device and a method for isolation or purification of any biomolecules using said device.

During the treatment of biological samples, e.g. for isolating or purifying biomolecules from said samples, it is very common that the sample is contacted with any or several liquid(s), optionally incubated to allow any reaction and thereafter interesting parts of the sample are separated from the remainder. Usually the used liquids are added or transferred by pipetting, wherein often several method steps have to be carried out before the interesting biomolecule is obtained in desired form. In any of the steps contamination of the sample may occur, furthermore it is laborious and time-consuming.

Several well-known approaches for biomolecule isolation are described in the state of the art, encompassing the binding of biomolecules to any matrix, like e.g. DNA or RNA binding to columns of nucleic acid binding materials, affinity binding, e.g. of proteins or low molecular molecules, or chromatographic devices separating the biomolecules according to their size or volume. Furthermore, the binding of any undesired compounds to separate them from the desired biomolecules is known, like e.g. using Chelex 100 for DNA isolation as described in Walsh et. Al, BioTechniques Vol. 10, No 4 (1991) or Burkhart et al 2002, J Biochem Biophys Methods 52 (2002) 145-149.

DE 21 25 027 A1 discloses a device for separating aqueous solutions from dispersions, wherein said device comprises a hydrophobic film with pores allowing water to pass only if the partial pressure at both sides of said film is different.

However, said document doesn't disclose the device comprising a solid matrix or at least one additional barrier for the sample.

US 2008/300397 A1 and WO2008/150779 A1 describe devices for treating liquid biological samples, having filter(s) and/or membrane(s) for purifying the sample, which, however, are not liquid-impermeable before an external force is applied to them, rendering them irreversibly liquid-permeable.

During isolation of biomolecules from samples containing them often a multi-phase system is obtained, wherein the biomolecule(s) of interest is/are contained in one of the phases. To divide the multi-phase sample in interesting and non-interesting parts the phases may be individually pipetted or removed, e.g. by pipetting each of the interesting phases separately, by penetrating non-interesting phases to remove an interesting phase or by penetrating the liquid containing container to obtain the interesting phase, however, the risk of contamination and/or loss of interesting sample parts is high.

The object of the present invention was to provide a device enabling temporary retention of a liquid within at least one compartment of a device and further timely defined delivery of said liquid in at least one further compartment of said device and a method for treatment of a liquid sample with less pipetting steps and diminished risk for cross-contamination.

This object is met by providing a device as defined in claim 1.

Said device can be used for collecting, storing or treating any liquid comprising sample, e.g. a liquid sample comprising a biomolecule of interest and/or for isolating or purifying a biomolecule of interest from such a sample or to replace pretreatment for a sample, cleanup, or other parts from an isolation or preparation procedure for biomolecules.

The hollow body (1) of the device can be made of any material suitable for sample collection, storage or treatment, like plastic, metal, glass, porcelain or similar, preferably the body is made of plastic. In particular the body preferably is made of a thermoplastic resin like polypropylene, polyethylene, polypropylene-copolymers, polyvinylchloride, polyurethane, polycarbonate, polyamide, polyimide, polystyrene, polyethyleneterephthalate, polylactide, ethylene-polyvinylacetate, vinylchloride vinylacetate copolymers, polyacetales, polyetheralcohols, vinylacetate copolymers or arylic polymers without being restricted to these.
The hollow body/ each of the hollow bodies of the device has at least one open end, which means that at least one end allows to insert something into the hollow body, like e.g. to insert the sample of interest and/or any liquid, or to remove something from the hollow body. The device has an inlet (2) and an outlet (3), wherein typically the inlet opening is on the "upper" end of the device and the outlet opening is on the "bottom" side of the device. Particularly preferred the inlet (2) and the outlet (3) are opposed to each other. Optionally the device further comprises at least one removable closing device (6), which closes removably at least one of the openings, e.g. the outlet (3) or the inlet (2), or several (optionally differently shaped) closing devices for all the openings.

According to the invention inside of the hollow body (1) the device has at least one barrier (5) of a material which is non-permeable for liquids and solids under ambience conditions, however, becomes irreversibly liquid-permeable as defined in claim 1 by applying an external force to the material, preferably pressure, drag force or driving power. Said at least one barrier (5) is/are in contact with all of the inner side walls of the hollow body (1) and flushes with said side walls, or is/are placed in a holder (7) which flushes with the side walls. Any remaining gap between the barrier (5) or the holder (7) can be sealed with a suitable sealing material. At least one barrier (5) is spaced apart from at least one open end of the hollow body (1), dividing the hollow body into at least two compartments
With "spaced" or "spaced apart" is meant, that at least one of the barrier(s) (5) is not in immediate vicinity to one of the open ends, but is dividing the hollow body from one open end to at least the other (optionally open) end into at least two compartments, which represent at least about 1/10 to 9/10, about 1/9 to 8/9, about 1/8 to 7/8, about 1/7 to 6/7, about 1/6 to 5/6, about 1/5 to 4/5, about ¼ to ¾, about 1/3 to 2/3 or about ½ to ½ of the hollow body. Optionally in both the compartments (a) further barrier(s) (5) can be contained. In accordance to the invention it is only necessary that at least one barrier (5) is separating the hollow body in at least two compartments.

With "ambience conditions" according to the present application is meant that the barrier material is under the same conditions as the ambience of the device, in particular no external forces are applied to the barrier material. External forces may be increased pressure on at least one of the surfaces or on any of the sides of the barrier, drag forces like vacuum or suction, driving forces like centrifugal forces, shaking or dashing, the last two mentioned preferably by utilization of inertia of the mass, or mechanical forces like puncturing, cutting, rupturing or similar. Accordingly, the material is under "ambience conditions" during common handling of the device like standing on the table, pipetting steps, incubation steps, heating and/or cooling, shaking or similar. "Increased pressure" means that at least twice the ambient pressure is externally applied to the barrier material. "Increased pressure" does not comprise the slightly increased pressure resulting from any liquid or solid matrix applied to the barrier material, e.g. if a column like a spin column is filled with a liquid or a solid matrix.

With "non-permeable for liquids" is meant that a liquid, e.g. an aqueous solution or water, an alcohol or an organic solution, particularly preferred an aqueous solution, is retained on the surface of the barrier and is not able to pass said barrier under ambience conditions and preferably is not even able to enter, to penetrate or to soak into the barrier material. It is particularly preferred that independent from the time period of contact of the liquid with the barrier said solution cannot pass the barrier as long as no external force is applied.

By applying any of the external forces cited above the material of the barrier (5) becomes irreversibly liquid-permeable. This means that the material diminishes its barrier character and allows at least any liquid, preferably a solution comprising solved materials, to pass the material. The permeability of the barrier - if obtained - is irreversible, even after returning to ambience conditions, in particular after removing the external force. Exemplified is this by that the barrier material becomes porous by applying pressure, drag force or driving power. After porosity is obtained the barrier remains liquid permeable due to the contained openings, even under ambience conditions.

The device comprises inside of the hollow body (1) above or below of the barrier (5) a porous frit which punctures the barrier material when an external force like e.g. pressure, drag force or driving power is applied to the device. If the barrier material is punctured, said puncturing is micropuncturing, which means that only very small punctures are obtained in the barrier material, not resulting in a rupture of the barrier (5), but making the barrier (5) porous.

With "above" is meant that, if the device is positioned in its use mode, e.g. a column is placed upright in a holder or a cup, the material or component which punctures the barrier material is on the upper side of said barrier material. In particular, if the device is used as intended including any liquid, the the material or component which punctures the barrier material is on the same side as the liquid and is pressed by application of the external force, in particular by applying pressure, drag force or driving power, to the upper surface of the barrier material which as well is in contact with the liquid.

If the material or component which punctures the barrier material is "below" the barrier material the bottom surface of the barrier material will be pressed by the external force to the the material or component which punctures the barrier material. In the latter case the material or component which punctures the barrier material is on the opposite side of the liquid-permeable element (4) as the liquid.

The intensity and type of the applied external force suitable for rendering the barrier(s) (5) liquid permeable depends from the material used for the barrier(s) (5) and optionally from the component or material used for puncturing the barrier(s) (5). It is preferred that the barrier(s) (5) is/are resistant against any external force up to a predetermined intensity, wherein due to the selected material and due to any treatment of the material the intensity when the barrier(s) (5) become(s) liquid permeable varies. For a skilled person it is easy to determine by standard experiments which type of external force and which intensity of any of the forces results in a liquid permeability of the selected materials for the barrier(s) (5). There can be different materials or thickness of the barrier material or a different principle, which results in different intensities of the external force necessary to make the barrier liquid permeable. However, it is particularly preferred that the barrier(s) (5) in any case is/are resistant to 1 x g, preferably to 2 x g, more preferred to 5 x g, even more preferred to 10 x g and particularly preferred to 20 x g, 40 x g or 50 x g. It is particularly preferred that the barrier (s) is 7 are resistant to 100 x g. In particular the barrier(s) should be resistant against the forces occurring during pipetting, turning, smooth vortexing and other commonly used process steps.

The barrier(s) (5) is/are preferably provided in form of a film, foil, coating, septum, membrane, hydrophobic sintered material (hydrophobic frit), a material which was made hydrophobic by chemical or other treatment or any other suitable form serving as an effective barrier. Suitable materials for the barrier (5) are for example hydrophobic filter materials; hydrophobic fiber web materials; membranes, films or foils of plastics, in particular thermoplastic or thermosetting polymers like polyethylene, polypropylene, polypropylene-copolymers, polyvinylchloride, polyurethane, polycarbonate, polyamide, polyimide, polystyrene, polyethyleneterephthalate, polylactide, ethylene-polyvinylacetate, vinylchloride vinylacetate copolymers, polyacetales, polyetheralcohols, vinylacetate copolymers, arylic polymers; or silicone; latex; polysaccharides, in particular cellulose ether and derivatives; thin metal layers like aluminium foil or copper foil, or any other suitable, preferably film-forming material which can be provided as a film, foil, coating, septum or membrane. As films or coatings thermoplastic polymers like polyethylene, polypropylene, polypropylene-copolymers, polystyrene, polyvinylchloride, polyurethane, polycarbonate or polyamide are particularly preferred. As a hydrophobic filter material a hydrophobized polyethylene filter is preferred, as a membrane a hydrophobized fiber membrane like e.g. any of the Filtrona ^{®} fiber membranes (Filtrona, Reinbek, Germany) and as a membrane such a material like Gore tex ^{®} or similar is preferred. Any water- resistant but vapour permeable membrane as well is preferred.

The component or material which punctures the barrier material a porous frit made of any inert material like e.g. silica or a polymer; A porous frit, serving as liquid-permeable element (4) as well is serving as a component puncturing the barrier material, if said barrier (5) is pressed to the element (4) when an external force as described above is applied to the device.

According to one of the simplest embodiments of the present invention the device can represent a hollow body (1) having at least one open end, containing inside of the hollow body (1) at least one barrier (5) spaced from at least one of the openings, comprising a material which becomes porous by applying pressure, drag force or driving power.

According to the present invention the hollow body (1) of the device further comprises inside at least one liquid-permeable element (4) which is a porous frit. Said liquid-permeable element(s) (4) mainly has/have the function to retain any solid material contained in at least one of the hollow body compartments from elution, but to allow any liquid and solved ingredients to pass the element (4). Accordingly, e.g. a liquid sample part can be separated from any solid sample part or a liquid sample can be purified by a chromatographic, a filtering, a chelating or a binding matrix contained and retained in the device. Said liquid permeable element(s) (4) preferably is/are in contact with all of the inner side walls of the hollow body (1) and flushes with said side walls, or is/are placed in holder (7) which flushes with the side walls and/or any remaining gap between the liquid permeable element (4) or the holder (7) may be sealed with a suitable sealing material.

At least one of the liquid permeable element(s) (4) can be adjacent to at least one of the barrier(s) (5), wherein "adjacent" means that it is either close to the barrier (5), however, doesn't contact it, or that it is in direct contact with the barrier (5). In case the barrier (5) represents a coating, it is preferred that the coating is placed on at least one surface of a liquid-permeable element (4), i.e. on one surface of the frit. In any case the liquid permeable element(s) (4) can be placed above or below of the barrier (5), wherein "above" and "below" is meant in the same sense as described above for the component or material which punctures the barrier material. Preferably the barrier (5) is above the liquid-permeable element (4), which means, that said barrier (5) is adjacent to the upper surface of a liquid-permeable element (4), if the device is positioned in the use mode (inlet (2) up, outlet (3) down).

According to the invention the hollow body (1) may contain more than one of the barriers (5), wherein the barriers (5) are separating the hollow body (1) into several compartments. For example, a hollow body (1) containing two barriers (5), comprises at least one "closed compartment" between the two barriers (5) and at least one compartment which has one open end corresponding to the at least one open end of the hollow body (5). The third compartment is either closed, if the hollow body has only one open end, or is open, if two open ends are present in the hollow body. The hollow body may comprise as well 3, 4, 5, 6 or more of the barriers (5), dependent from the intended use of the device.

If more than one barrier (5) is contained in the hollow body (5) it is preferred that they have different resistance against external forces before they become liquid permeable. In particular it is preferred that several barriers contained inside of the same hollow body (1) show from the inlet (2) to the outlet (3) side an increased resistance against the same type of external force. For example, if three barriers (5) are contained in the hollow body (1) the first barrier (5) (which is the closest to the inlet side) has a defined resistance against centrifugal forces. The second barrier (5) (which is more inside of the hollow body) has an increased resistance against centrifugal forces compared to the first barrier and accordingly centrifugation has to be accelerated to make the second barrier liquid permeable. The third barrier (5) (which is farthest from the inlet side of the hollow body) has again an increased resistance against centrifugal forces compared to the second barrier and accordingly centrifugation has to be accelerated to make the third barrier liquid permeable. Each of the barriers (5) can be independently selected from the materials described above for the barrier, but it is preferred that they either consist of different materials or of the same basic material, but showing different properties. For instance, each of the barriers may consist of the same thermoplastic polymer film, however each of the films has a different thickness. A further possibility is that the barriers (5) are differently treated, e.g. the first barrier comprises an orifice which opens by application of a centrifugal force, the second barrier is a film of a defined thickness having a tinned area serving as a predetermined breaking point and the third barrier is a film of the same material having a continuous thickness becoming porous when the centrifugal force is increased so that said film is contacted with a rough surface of a porous material, e.g. a frit placed adjacent below said third barrier.

The embodiments exemplified here are not limiting the possible embodiments. It is clear for a skilled person that any combination of barrier materials and /or material treatments can be used as long as the barriers (5) contained in the hollow body (1) of the device allow a compartmentation of said hollow body (1) and can be made liquid permeable by applying any external force. Preferably the barriers (5) can be made sequentially liquid permeable, wherein "sequentially" means that they become liquid permeable one after the other by increasing the external force or by changing the external force.

The device comprises (i) at least one hollow body (1), each hollow body (1) having an inlet (2) and an outlet (3); (ii) at least one barrier (5) inside of the hollow body, spaced apart of the outlet (3); (iii) at least one liquid permeable element (4) which is a porous frit, placed above of the outlet (3) but below of at least one of the barrier(s) (5); (iv) optionally at least one removable closing device (6) to seal the inlet (2) and/or outlet (3) of the hollow body; and (v) optionally at least one collection tube to collect a mobile phase (eluate) after having passed the outlet (3).

An example according to the present invention is an embodiment wherein at least one non-permeable barrier (5) is placed adjacent to at least one liquid permeable element (4), which is a porous frit which means close to or in direct contact with element (4) inside of a hollow body. For further instance at least one non-permeable barrier (5) is placed between at least two of the liquid permeable elements (4) in direct contact with at least one of said frits.

Furthermore, the hollow body may comprise at least one liquid-permeable element (4) which has no contact to any of the barrier(s) (5). Preferably a liquid permeable element (4) is in proximate neighborhood to the outlet side of the device. "Proximate" means that no further reaction compartment of the hollow body is between the element (4) and the outlet, however, due to the construction of the device indeed some space might be between the element (4) and the end of the device.

A further embodiment wherein the preferred properties are achieved is a device comprising several hollow bodies (1) as described above, wherein either each of the hollow bodies (1) are build up similarly or the assembly of the hollow bodies differ from each other, however, at least a part of the hollow bodies fall under the description as defined above.

Although the form of the device is not limiting the present invention, in a preferred embodiment the hollow body/bodies of the device is/are at least partially cylindrical or at least partially conical. Non-limiting examples for embodiments of the invention are reaction tubes, reaction cups, collection tubes, collection containers, a column body, centrifugation tubes, microcentrifuge tubes, in particular compartmented containers like tubes, cups, flasks, chromatographic columns, spin columns, plastic syringe, multi well plates, multiwell blocks, multiwell column plates, flasks, bottles, cups, phiols, collection or centrifugation vessels or similar.

The device can further comprise a removable closing device (6) on at least one of the open ends. Said closing device serves to keep the inside of the device clean and/or sterile or optionally to keep the content of the device inside of the hollow body (1).

The closing device (6) can be easily removed before, during and/or after usage of the device. Preferably the closing device (6) is used when the device contains any liquid or flowable or movable solid material. The closing device (6) can be for example a cap, a plug, a cover plate, a film or foil, or any other suitable removable closing device. It can be reclosable or a disposable closing device. The closing devices (6) of an inlet (2) and an outlet (3) side can differ from each other or can be the same type of closing device (6).

The device of the present invention may further comprise any liquid, buffer or solution in at least one of the compartments of the hollow body (1), wherein said liquid, solution or buffer is prevented from leakage by at least one barrier (5), which means that either the liquid, solution or buffer is between two barriers (5) or the liquid is retained by one barrier (5) and the device comprises at least one closing device (6). The device further can contain several independently selected liquids in several compartments. Additionally or alternatively the device can comprise a solid material, wherein "solid" means that the material is not dissolved in a liquid, but might be suspended or dispersed in a liquid. The solid matrix material preferably is a particulate material, more preferred a particulate matrix material for chelating, binding, adsorbing, absorbing, filtration size exclusion or chromatographic separation of a sample, a fiber web or fleece as defined more in detail below. Of course the device can contain as well in at least one of the compartments any liquid and in at least one further compartment a solid material, preferably a particulate matrix material.

The device of the present invention can be used for collection, storage or treatment of a sample, particularly of a liquid containing sample. With "liquid sample" is meant that either the sample itself is a liquid, solution, suspension or dispersion, or any gelly, solid or particulate sample or a biological sample as described below is combined with any liquid or solution to obtain a solution, dispersion or suspension. Preferably the device can be used for collection, storage or treatment of at least one liquid sample comprising any biomolecule, e.g. for isolation or purification of at least one biomolecule from said sample. The liquid can be (temporally) retained in at least one of the compartments of the device and can be moved sequentially from one compartment to the next or can be released, respectively, at desired time points by applying respectively an (optionally increasing) external force to the device as described above.

The liquid or solution can be any aqueous or organic based liquid or solution like water, any aqueous buffer, a cell culture medium, a nutrient solution, an organic solvent or any reaction solution or mixtures thereof. Preferably the solution is an aqueous buffer, wherein the buffer is not restricted to a particular buffer, but is preferably any of the buffers commonly used for cell treatment, in particular used during a biomolecule isolation method, or the solution is a cell culture medium or nutrient solution.

Furthermore, the device according to the present invention can be used for separating a multiphase liquid system or a multiphase liquid/solid system.

A biomolecule according to the present invention is any molecule occurring in a biological sample. A biological sample can be any body fluid or tissue or a human or animal including insects, like blood, plasma, serum, blood fractions like leukocyte fraction or buffy coat, urine, serum, liquor, sputum, sperm, saliva etc, tissue of any organ, brain, skin, muscle etc.; scales; swabs; faeces; keratinic samples like hair, nails, horns or antlers; carapaces or wings (in particular of insects); cell suspensions or cell cultures, cell fragments or cell organelles like chloroplasts or mitochondrions, vesicles, nuclei or chromosomes; samples comprising bacterial, fungal or yeast cells or fragments, any type of virus, viroid or prions; histological samples like punctates or tissue slices; tissue cultures; plants; plant parts, cells or tissue; samples taken from the environment, like e.g. water, dust, air or mud samples; food samples; forensic samples like cigarette filters, textile samples, tooth brush; any solution comprising an prepurified or preisolated biomolecule etc. without being restricted to the mentioned examples.

Accordingly a biomolecule is any nucleic acid like DNA or RNA, in particular lienar, branched or circular, single stranded or double stranded nucleic acids, more particular mRNA, siRNA, miRNA, snRAN, tRNA, hnRNA or ribozymes, genomic, plasmid or organelles DNA; any nucleotide, oligonucleotide or polynucleotide, even synthetic, modified or labeled oligo- or polynucleotides; PCR-primers, short DNA or RNA fragments for hybridization; PNAs (peptide nucleic acids); any protein, peptide or amino acid, including unlabeled or labeled antibodies, receptors, hormones, growth factors and modified proteins, nucleic acids, proteins and peptids of infectious origin; metabolite, any lipid; sugar (monomer, oligomer or polymer); proteoglucanes; any low molecular pathway product, signal molecule, receptor or enzyme activator or inhibitor; agents, medicaments and metabolites of medicaments, medicaments or any other biomolecule of interest.

The present invention comprises further a method for isolation or purification of at least one biomolecule of interest from a sample comprising at least one type of biomolecules, comprising
(a) placing the sample inside of a first compartment of the hollow body (1) of a device as described above comprising at least two compartments separated by at least one non-liquid permeable barrier (5), wherein either the sample is a liquid sample, or the sample is contacted with any liquid before or after placing the sample inside of the hollow body, or the hollow body comprises a liquid coming in contact with the sample when said sample is placed into the device,
(b) optionally incubating the sample inside of the first compartment of the hollow body (1),
(c) applying an external force, preferably pressure, drag force or driving power to the barrier (5), resulting in that a first barrier (5) becomes irreversibly liquid permeable and the liquid is transferred into a further compartment of the hollow body (1),
(d) optionally incubating the sample inside of the further compartment of the hollow body (1),
(e) applying an external force to a following barrier (5), resulting in that said barrier (5) becomes irreversibly liquid permeable and the liquid is transferred into a further compartment of the hollow body (1),
(f) collecting an eluate comprising the biomolecule of interest.

The steps (d) and (e) can be repeated as often as it is suitable due to the number of barriers (5) inside of the hollow body (1). Each of the compartments might be at least partially filled with any liquid or any solid material suitably used during any treatment of a biological sample.

In said method according to one preferred embodiment the hollow body (1) of the device may comprise in at least one of its compartments either a solid matrix material or at least one liquid or both before the biomolecule comprising sample is added. For example, the device comprises a particulate resin for chromatographic separation of the sample, a binding, absorbing, adsorbing or chelating matrix for specific or unspecific binding, absorption or adsorption of sample compositions, a filtration material, beads for lysis of cells or for binding of cell components, or any other component commonly used for biomolecule isolation or purification. One preferred solid particulate matrix is a chelating resin purifying compounds by ion exchange, chelating e.g. metal ions, in particular transition metal ions. Such a commonly known resin is a styrene-divinylbenzene resin comprising imino diacetic acid groups, sold under the name Chelex 100 (Biorad), which is suitably used for DNA or RNA isolation, wherein the nucleic acids don't bind to said resin. Further any inert material like e.g. agarose, Sephacryl resin, silicone; latex; polysaccharides, cellulose ether and derivatives, thermosetting ot thermoplastic polymers, metals or further solid matrices like beads, films, foils, particles etc. may be used. Said materials may comprise functional groups on their surface(s) selectively binding any of the undesired contaminants. A further preferred matrix comprises or consists of a ion exchanging matrix or a matrix comprising specific binding sites for biological compounds. The matrix further may comprise woven or non-woven fibers or a fleece, e.g. of silica, polysaccharides or any other suitable material.

The matrix suitable to separate the contaminants from the desired biomolecules further can comprise or consist of HIC particles (hydrophobic interaction chromatography particles, Dionex Corp., USA), cationic or anionic exchanging material; size exclusion material like agarose; gel filtration material; minerals, like e.g. hydroxylapatit, bentonite, zeolithe, kaolinit, diatomite or processed minerals like silica; lnhibitEX^{®} (Qiagen, Hilden, Germany), IDA (iminodiacetic acid), NTA (nitrilo acetic acid), and derivatives of the last two mentioned, a resin or other substrate with IDA or NTA groups or derivates of them, EDTA, specific antibodies, amphipol; charcoal, PVP (polyvinylpyrrolidone);superabsorbing polymers; Non-fat milk cocktails, termed BLOTTO (Bovine Lacto Transfer Technique Optimizer) (in S. H. De Boer*(1995) Nucleic Acids Research, 1995, Vol. 23, No. 13 2567-2568); Polysaccharides, e.g. chitosane, starch, glycogen, cellulose or derivates of them; proteins like specific antibodies or enzymes; without being restricted to the mentioned examples.
It is particularly preferred in the present method that the device comprises a matrix which adsorbes, absorbes, chelates, binds or filtrates compounds of the biological sample which are undesired for further processing whereas the biomolecule(s) of interest are essentially not adsorbed, absorbed or bound. The compounds which are undesired for the further processing are biomolecules, which shouldn't be isolated in the process on the other hand inhibitors which interfere the downstream processes.

A further suitable matrix comprises woven or non-woven fibers or a fleece, e.g. of silica or polysaccharides. Preferably a compartment containing a solid matrix is bordered by at least one liquid permeable element (4), retaining the solid matrix within the compartment independent from the liquid transfer into any further compartment(s) or to the outlet (3) of the device.

Additionally, or alternatively in any of the compartments of the hollow body (1) any liquid or solution can be contained, like a lysis buffer for cell lysis, a liquid for tissue dissolution, an organic solvent or any other liquid or solution commonly used during isolation and/or purification of a biomolecule from a sample.

In step (a) the sample comprising at least one biomolecule of interest is placed into a first compartment of the hollow body (1) of the inventive device. Said sample is either a liquid sample, or the sample is a solid sample like a cell, tissue or any other of the biological samples mentioned above containing less liquid and is contacted with any liquid before or after placing the sample inside of the hollow body, or the hollow body comprises a liquid coming in contact with the sample when said sample is placed into the device.

The method comprises at least one optional incubation step (b) wherein ingredients of the solutions or buffers comprised in the sample are allowed to be active or to react with the biological sample. For example, if the biological sample is a cell containing or tissue containing sample and a lysis buffer was added to said sample, the lysis of the cells or tissue is allowed to occur during an optional incubation step. On the other hand, if a solid matrix material is contained in the hollow body, during any of the incubation step(s) any binding, chelating, absorption or adsorption of sample ingredients may occur.

In step (c) it is preferred that a defined first external force is applied to the first barrier (5), resulting in that said first barrier (5) becomes irreversibly liquid permeable. If further barriers (5) are contained in the hollow body (1) it is particularly preferred that they don't become liquid permeable during application of the defined external force in step (c). E.g. pressure may be applied to the inlet (2) of the device, pressing the biomolecule of interest into a next compartment of the hollow body (1); or centrifugal forces are applied to the device transferring al least a part of the liquid comprising the biomolecule of interest into a next compartment of the hollow body (1); or a combination of said forces is applied to the device. In case that only one barrier (5) is contained in the hollow body it is as well possible to apply vacuum to the outlet (3) of the device, sucking the biomolecule of interest to the outlet side of the device.

In optional step (d) the liquid sample may be further incubated, e.g. in another compartment in contact with a further liquid or a solid phase. As an example the first compartment comprised a liquid like e.g. a lysis buffer and after incubation according to step (b) and a first application of an external force according to step (c) the sample is contacted in a further compartment with a solid phase like for example a Chelex resin. After an incubation step (d) according to step (e) a further external force is applied to the device, e.g. an increased pressure or centrifugal force, wherein it is preferred that said further external force differs from the external force applied in step (c), either a different type of force may be applied or the intensity of the force changes. The application of the additional external force renders the next present barrier liquid permeable and the liquid sample part is transferred either in a next compartment of the hollow body (1) or is eluted from the device. In case that the sample is transferred into a next compartment optional steps (d) and (e) independently may be repeated, wherein preferably each following barrier (5) is more resistant against an external force than the barrier (5) before and accordingly in any further step the applied external force is increased or the type of the applied external is changed.

Comprised in the present inventive method is an embodiment wherein the hollow body (1) of the device comprises 2, 3, 4, 5 or 6 barriers (5), resulting in 3, 4, 5, 6 or 7 compartments of the hollow body (1), therefore steps (d) and/or (e) are repeated as often as necessary during an isolation or purification process to overcome all the contained barriers (5) and to obtain later in step (f) an eluate containing the biomolecule of interest.

As well comprised in the method of the invention is that during the process comprising steps (a) to (e) at any stage additionally any further step is carried out. For example, at any stage any additional liquid might be added into the hollow body (1) of the device, e.g. by pipetting the liquid into the hollow body (1) from the inlet (2) side. Furthermore, any heating or cooling step may be carried out if appropriate for the intended result. Additionally or alternatively steps for mixing like inverting or shaking might be useful for the intended result.

In a last step (f) at least one eluate passing the last compartment is collected. Independent from any further optional steps between step (c) and step (e) the biomolecule of interest can be obtained after applying at least once an external force to the inventive device.

Dependent from the used isolation or purification procedure and the matrix or matrices contained in the hollow body (1) of the device the biomolecule of interest may be contained in the first eluate passing the liquid-permeable element (4), or the biomolecule of interest is contained in any later eluate. For example, if the matrix in the last compartment before the outlet (3) is a binding, absorbing or adsorbing matrix for the biomolecule and any washing steps are comprised in the isolation /purification procedure, the interesting biomolecule is comprised in a later eluate. In this case said eluate either can be obtained by applying again any external force to the device, or the eluate is able to pass the liquid-permeable element by gravitational force only. Preferably at least one matrix contained in the hollow body (1) is not absorbing, adsorbing or binding the biomolecule of interest.

The device of the present invention can be prepared by placing at least one barrier (5) inside of a hollow body (1) having at least one open end, wherein at least one barrier (5) is spaced apart from said open end, compartmenting the hollow body (1) of the device in at least two compartments. The barrier(s) (5) is/are placed in the hollow body (1) in a way that the barrier (5) or each of the barriers (5) is either in direct contact with all of the inner side walls of the hollow body (1) and flushes with said side walls, or the barrier(s) is/are placed in a holder (7) which is in contact with all of the inner side walls of the hollow body (1) and flushes with said side walls. Any remaining gap between the barrier(s) (5) and the side walls or the holder (7) and the side walls might be filled with an adhesive or sealing material.

Additionally to the barrier(s) (5) at least one liquid-permeable element (4) is placed inside of the hollow body (1), either adjacent to at least one barrier (5) or spaced apart of it/them. The liquid-permeable element (4) either can be placed inside of the hollow body (1) before the barrier (5) is placed inside, or the barrier (5) is placed inside the hollow body (1) before the liquid-permeable element (4) is placed inside the body (1). In a preferred preparation method of the device at least one liquid-permeable element (4) is brought in contact with at least one barrier (5) material and thereafter the combined "module" of liquid-permeable element (4) and barrier (5) is placed inside of the hollow body. For instance such a "module" can comprise one liquid-permeable element (4), which is a frit, and one barrier (5) material, preferably a film, foil or coating, membrane or septum, hydrophobic sintered material, hydrophobic fibrous material, or it can comprise two liquid-permeable elements (4), wherein between them two at least one barrier (5) material is contained like a "sandwich" structure. The hollow body (1) can comprise one or several of such modules, and optionally additionally at least one separate barrier (5) or liquid-permeable element (4). It is particularly preferred that if at least one compartment of the hollow body comprises a solid matrix said compartment is bordered by at least one liquid permeable element (4) or a module comprising at least one liquid permeable element and at least one barrier (5) to retain the solid matrix in the compartment when the liquid part is transferred into the next compartment or to the outlet (3).

It is preferred that the barrier (5) and the liquid-permeable element (4) or the module comprising both are either sized in a way that thy fit exactly into the hollow body, flushing with all of the side walls of said hollow body, or that they are placed in or are connected with a holder (7) which fits exactly into the hollow body, flushing with all of the side walls of said hollow body. Any remaining gap might be filled with an adhesive or sealing material. The barrier (5) and the liquid-permeable element (4) can be fixed at the predetermined point by using a clamping ring or grid below the barrier (5) and/or the liquid-permeable element (4).

If no holder (7) is used, it is either preferred that the hollow body comprises at least one flange or support element for any of the liquid-permeable element(s) (4) or the barrier(s) (5) or both whereon the element (4) or the barrier (5) can bear, or the barrier (5) or element (4) are placed upon a support element which is transfixed inside the hollow body (1) or the barrier (5) and/or the liquid-permeable element (4) is contacted with the side walls via a suitable adhesive like e.g. a silicon adhesive, a crosslinking resin, a gum, a thermoplastic or thermosetting polymer or. The type of adhesive is not limiting the invention as long as it is not reactive with one of the ingredients added into the inventive device if used as intended. In a further embodiment the hollow body (1) is conical and the liquid-permeable element (4) and/or the barrier (5) are sized in a way that they fit only at a predetermined place inside of the hollow body (1) and are placed at this predetermined place by pressing the element (4) or the barrier (5) on said place where they are kept by tension. In any of the embodiments it might be advantageous to seal any remaining gap between the liquid-permeable element (4) and/or the barrier (5) or the holder (7) with a suitable sealing material. Suitable sealing materials are e.g. silicone polymers, thermoplastic or thermosetting polymers or resins.

According to the desired use, e.g. the desired biomolecule isolation or purification method, the hollow body (1) further can be at least partially filled with any material which is suitably used within such an isolation or purification method. In a preferred method any chromatographic, chelating, binding, absorbing, adsorbing or filtering material is added into the hollow body, like for example Chelex resin, silicate particles or fibers, ion exchanging materials or any similar. In a particularly preferred embodiment at least one compartment of the hollow body is at least partially filled with a chelating resin, not binding the biomolecule of interest, e.g. Chelex resin for nucleic acid isolation.

The present invention further includes a kit for collecting, storing or treating a biological sample or for isolation of a biomolecule from a biological sample, comprising a device as described above.

### Figures:

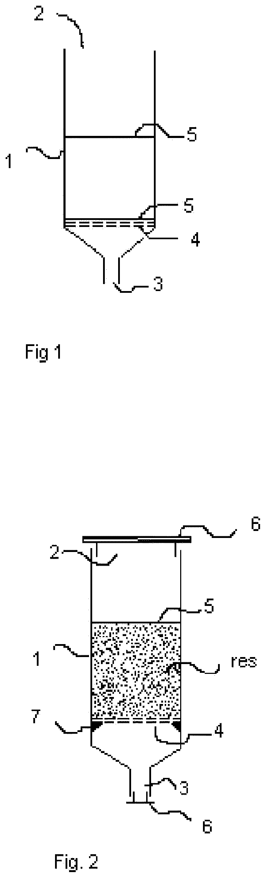

Figure 1 shows one embodiment of the device of the present invention, which is a spin column comprising a hollow body (1), an inlet (2) and an outlet (3), a porous frit (4), a polyester film as an upper barrier (5) and an aluminium foil as a lower barrier (5). The space between the barriers (5) may be filled e.g. with any liquid.

Figure 2 shows one embodiment of a device not according to the present invention, which is a spin column comprising a hollow body (1), an inlet (2) and an outlet (3), a porous frit (4), a polystyrene film (5), a holder (7) and two removable closing devices (6), further comprising a particulate resin (res).

## Claims

1. Device, comprising (i) at least one hollow body (1), each hollow body (1) having at least one open end; (ii) at least one barrier (5) which is non-permeable for liquids and solids under ambience conditions, however, becomes irreversibly liquid-permeable by becoming porous by applying an external force to said barrier (5), placed inside of the hollow body spaced apart from the at least one open end of the hollow body; (iii) at least one porous liquid-permeable element (4) inside of the hollow body; (iv) optionally at least one removable closing device (6) to seal at least one open end, wherein the hollow body (1) further comprises either a solid matrix material or at least one additional barrier (5), wherein each hollow body (1) has an inlet (2) and an outlet (3), at least one barrier (5) placed adjacent of at least one of the liquid permeable element(s) (4), at least one liquid permeable element being a porous frit (4) placed above the outlet (3) **characterized in that** the at least one barrier (5) becomes porous by being micropunctured by the porous frit when an external force is applied to the device.

2. Device according to claim 1, comprising (i) at least one hollow body, each hollow body (1) having at least one removable closing device (6) to seal the inlet (2) and/or outlet (3) of the hollow body; and (v) optionally at least one collection tube to collect a mobile phase (eluate) after having passed the outlet (3).

3. Device according to claim 1 or 2, embodiment comprising more than one barrier (5), preferably 2, 3, 4, 5, or 6 barriers (5), separating the hollow body (1) into more than two compartments.

4. Device according to any of claims 1 to 3, **characterized in that** the barriers (5) are individually selected from a film, foil, coating, septum, membrane hydrophobic sintered material or hydrophobic fibrous material.

5. Device according to any of claims 1 to 4, **characterized in that** the hollow body (1) is at least partially cylindrical or conical.

6. Device according to claim 5, representing a reaction tube, a reaction cup, a collection tube, a collection container, a column body, a spin column, a centrifugation tube, microcentrifuge tubes, in particular compartmented containers like tubes, cups, flasks, chromatographic columns, spin columns, plastic syringe, multi well plates, multiwell blocks, multiwell column plates, flasks, bottles, cups, phiols, collection or centrifugation vessels.

7. Device according to any of claims 1 to 6, **characterised in that** the barrier (5) material becomes porous by applying pressure, drag force or driving power

8. Use of a device according to any of claims 1 to 7 for collection, storage or treatment of a liquid containing sample or for collection, storage, treatment or isolation of a biomolecule or biomolecule containing samples, preferably for isolating and/or purifying a biomolecule from a liquid sample.

9. Use of a device according to any of claims 1 to 7 for phase separation of a multiphase liquid / solid system or a multiphase liquid system.

10. Method for preparing a device according to any of claims 1 to 7, comprising placing at least one barrier (5) which is non-permeable for liquids and solids under ambience conditions, however, becomes irreversibly liquid-permeable by becoming porous by applying an external force to said barrier (5) into a hollow body in a way that inside of the hollow body spaced apart from at least one open end a barrier (5) is obtained, separating the hollow body (1) in at least two compartments; comprising further placing at least one liquid permeable element (4), which is a porous frit into the hollow body (1).

11. Method for isolation or purification of at least one biomolecule of interest from a sample comprising at least one type of biomolecules, comprising
a. placing the sample inside of a first compartment of the hollow body (1) of a device according to any of claims 1 to 7 comprising at least two compartments separated by at least one non-liquid permeable barrier (5), wherein either the sample is a liquid sample, or the sample is contacted with any liquid before or after placing the sample inside of the hollow body, or the hollow body comprises a liquid coming in contact with the sample when said sample is placed into the device,
b. optionally incubating the sample inside of the first compartment of the hollow body (1),
c. applying an external force, preferably pressure, drag force or driving power to the barrier (5), resulting in that a first barrier (5) becomes irreversibly liquid permeable and the liquid is transferred into a further compartment of the hollow body (1),
d. optionally incubating the sample inside of the further compartment of the hollow body (1),
e. applying an external force to a following barrier (5), resulting in that said barrier (5) becomes irreversibly liquid permeable and the liquid is transferred into a further compartment of the hollow body (1),
f. collecting an eluate comprising the biomolecule of interest.

12. Method according to claim 11, wherein the hollow body (1) of the device comprises 2, 3, 4, 5 or 6 barriers (5), resulting in 3, 4, 5, 6 or 7 compartments of the hollow body (1) and steps (d) and/or (e) are repeated as often as necessary during an isolation or purification process to overcome all the contained barriers (5) and to obtain an eluate containing the biomolecule of interest.

13. Method according to claim 11 or 12, wherein at least one of the compartments of the hollow body (1) of the device comprises further a solid matrix and/or at least one liquid before the biomolecule comprising sample is added.

14. Method according to any of claims 11 to 13, wherein the applied external force in step (c) and the applied external force(s) applied in optionally repeated step(s) (e) differ from each other either in intensity of the force or in type of the force, preferably the intensity of the same type of force increases step by step, or the type of the force is changed, resulting in that the barriers (5) become sequentially irreversibly liquid permeable.

15. Kit for collecting, storing or treating a biological sample or for isolation of a biomolecule from a biological sample, comprising a device according any of claims 1 to 7.

## Patentansprüche

1. Eine Vorrichtung, umfassend (i) wenigstens einen Hohlkörper (1), wobei jeder Hohlkörper (1) wenigstens ein offenes Ende aufweist, (ii) wenigstens eine Barriere (5), die unter Normalbedingungen für Flüssigkeiten und Feststoffe undurchlässig ist, jedoch irreversibel durchlässig für Flüssigkeiten wird, indem sie porös wird, wenn die Barriere (5) einer externen Kraft ausgesetzt wird, und von dem wenigstens einen offenen Ende des Hohlkörpers beabstandet innerhalb des Hohlkörpers platziert ist, (iii) wenigstens ein poröses, für Flüssigkeiten durchlässiges Element (4) im Inneren des Hohlkörpers, (iv) optional wenigstens eine entfernbare Schließvorrichtung (6), um wenigstens ein offenes Ende zu verschließen, wobei der Hohlkörper (1) zusätzlich entweder ein festes Matrixmaterial oder wenigstens eine zusätzliche Barriere (5) umfasst, wobei jeder Hohlkörper (1) einen Einlass (2) und einen Auslass (3) aufweist, die wenigstens eine Barriere (5) an wenigstens eines der für Flüssigkeiten durchlässigen Element(e) (4) angrenzend positioniert ist, das für Flüssigkeiten durchlässiges Element eine poröse Fritte (4) ist, die oberhalb des Auslasses (3) angeordnet ist, **dadurch gekennzeichnet, dass** die wenigstens eine Barriere (5) dadurch porös wird, dass sie von der porösen Fritte mikropunktiert wird, wenn eine externe Kraft an die Vorrichtung angelegt wird..

2. Die Vorrichtung gemäß Anspruch 1, umfassend (i) wenigstens einen Hohlkörper, wobei jeder Hohlkörper (1) wenigstens eine entfernbare Schließvorrichtung (6) aufweist um den Einlass (2) und/oder den Auslass (3) des Hohlkörpers zu verschließen, und (v) optional wenigstens ein Sammelröhrchen, um eine mobile Phase (Eluat) aufzufangen, nachdem diese den Auslass (3) passiert hat.

3. Die Vorrichtung gemäß Anspruch 1 oder 2, umfassend in einer Ausführungsform mehr als eine Barriere (5), vorzugsweise 2, 3, 4, 5 oder 6 Barrieren (5), die den Hohlkörper (1) in mehr als zwei Abteilungen unterteilen.

4. Die Vorrichtung gemäß einem der Ansprüche 1 bis 3, **dadurch gekennzeichnet, dass** die Barrieren (5) unabhängig voneinander ausgewählt sind aus einem Film, einer Folie, einer Beschichtung, einem Septum, einer Membran, einem hydrophoben gesinterten Material oder einem hydrophoben Fasermaterial.

5. Die Vorrichtung gemäß einem der Ansprüche 1 bis 4, **dadurch gekennzeichnet, dass** der Hohlkörper (1) eine wenigstens teilweise zylindrische oder konische Form aufweist.

6. Die Vorrichtung gemäß Anspruch 5, die ein Reaktionsröhrchen, ein Reaktionscup, ein Sammelröhrchen, einen Sammelbehälter, einen Säulenkörper, ein zentrifugierbares Säulchen, ein Zentrifugationsröhrchen, Mikrozentrifugationsröhrchen, insbesondere unterteilte Behälter wie Röhrchen, Cups, Kolben, Chromatographiesäulen, zentrifugierbare Säulchen, Plastikspritzen, Multiwellplatten, Multiwellblöcke, Multiwellsäulenplatten, Flaschen, Phiolen, Sammel- oder Zentrifugationsgefäße, darstellt.

7. Die Vorrichtung gemäß einem der Ansprüche 1 bis 6, **dadurch gekennzeichnet, dass** das Material der Barriere (5), wenn sie Druck, Zugoder Triebkraft ausgesetzt wird, porös wird.

8. Verwendung einer Vorrichtung gemäß einem der Ansprüche 1 bis 7 zum Sammeln, Lagern oder Behandeln einer flüssigkeitshaltigen Probe, oder zum Sammeln, Lagern, Behandeln oder Isolieren eines Biomoleküls oder biomolekülhaltiger Proben, vorzugsweise zum Isolieren und/oder Aufreinigen eines Biomoleküls aus einer flüssigen Probe.

9. Verwendung einer Vorrichtung gemäß einem der Ansprüche 1 bis 7 zur Phasenseparation eines mehrphasigen Flüssigkeits-/Feststoffsystems oder eines mehrphasigen Flüssigkeitssystems.

10. Ein Verfahren zur Herstellung einer Vorrichtung gemäß einem der Ansprüche 1 bis 7, umfassend das Positionieren von wenigstens einer Barriere (5), die unter Normalbedingungen für Flüssigkeiten und Feststoffe undurchlässig ist, jedoch irreversibel für Flüssigkeiten durchlässig wird, indem sie porös wird, wenn die Barriere (5) einer externen Kraft ausgesetzt wird, in einen Hohlkörper, in einer Weise, dass innerhalb des Hohlkörpers beabstandet von wenigstens einem offenen Ende eine Barriere (5) erhalten wird, die den Hohlkörper (1) in wenigstens zwei Abteilungen unterteilt, zusätzlich umfassend das Platzieren wenigstens eines für Flüssigkeiten durchlässigen Elements (4), das eine poröse Fritte darstellt, in den Hohlkörper (1).

11. Ein Verfahren zum Isolieren oder Aufreinigen wenigstens eines Biomoleküls von Interesse aus einer Probe, die wenigstens eine Art von Biomolekül(en) enthält, umfassend:
a. Platzieren der Probe innerhalb einer ersten Abteilung des Hohlkörpers (1) einer Vorrichtung gemäß einem der Ansprüche 1 bis 7, umfassend wenigstens zwei Abteilungen, die von wenigstens einer für Flüssigkeiten undurchlässigen Barriere (5) getrennt werden, wobei entweder die Probe eine flüssige Probe ist, oder die Probe, bevor oder nachdem sie in den Hohlkörpers gegeben wird, mit einer Flüssigkeit in Kontakt gebracht wird, oder der Hohlkörper eine Flüssigkeit enthält, die mit der Probe in Kontakt kommt, sobald die Probe in die Vorrichtung gegeben wird,
b. optional Inkubieren der Probe innerhalb der ersten Abteilung des Hohlkörpers (1),
c. Anlegen einer externen Kraft an die Barriere (5), vorzugsweise Druck, Zug- oder Triebkraft, die dazu führt, dass eine erste Barriere (5) irreversibel für Flüssigkeiten durchlässig wird und die Flüssigkeit in eine weitere Abteilung des Hohlkörpers (1) überführt wird,
d. optional Inkubieren der Probe innerhalb der weiteren Abteilung des Hohlkörpers (1),
e. Anlegen einer externen Kraft an eine nachfolgende Barriere (5), die dazu führt, dass diese Barriere (5) irreversibel für Flüssigkeiten durchlässig wird und die Flüssigkeit in eine weitere Abteilung des Hohlkörpers (1) überführt wird,
f. Sammeln eines Eluats, das das Biomolekül von Interesse enthält.

12. Das Verfahren gemäß Anspruch 11, wobei der Hohlkörper (1) der Vorrichtung 2, 3, 4, 5 oder 6 Barrieren (5) umfasst, was 3, 4, 5, 6 oder 7 Abteilungen innerhalb des Hohlkörpers (1) ergibt, und die Schritte (d) und/oder (e) während eines Isolierungs- oder Aufreinigungsverfahrens so oft wie nötig wiederholt werden, um alle enthaltenden Barrieren (5) zu überwinden und ein Eluat enthaltend das Biomolekül von Interesse zu erhalten.

13. Das Verfahren gemäß Anspruch 11 oder 12, wobei wenigstens eine der Abteilungen des Hohlkörpers (1) der Vorrichtung zusätzlich eine feste Matrix und/oder wenigstens eine Flüssigkeit umfasst, bevor die Probe, die das Biomolekül umfasst, hinzugefügt wird.

14. Das Verfahren gemäß einem der Ansprüche 11 bis 13, wobei die angelegte externe Kraft in Schritt (c) und die angelegte(n) externe(n) Kraft/Kräfte, die in dem/den optional wiederholten Schritt(en) (e) sich voneinander entweder in der Intensität der Kraft oder in der Art der Kraft unterscheiden, wobei vorzugsweise die Intensität der gleichen Art Kraft von Schritt zu Schritt zunimmt, oder die Art der Kraft geändert wird, was dazu führt, dass die Barrieren (5) sequentiell irreversibel für Flüssigkeiten durchlässig werden.

15. Ein Kit zum Sammeln, Lagern oder Behandeln einer biologischen Probe oder zur Isolierung eines Biomoleküls aus einer biologischen Probe, umfassend eine Vorrichtung gemäß einem der Ansprüche 1 bis 7.

## Revendications

1. Dispositif comprenant (i) au moins un corps creux (1), chaque corps creux (1) ayant au moins une extrémité ouverte ; (ii) au moins une barrière (5), qui est non-perméable aux liquides et aux solides dans des conditions ambiantes mais devient perméable aux liquides de manière irréversible en devenant poreuse en appliquant une force externe à ladite barrière (5), placée à l'intérieur du corps creux, éloignée de la au moins une extrémité ouverte du corps creux ; (iii) au moins un élément poreux perméable aux liquides (4) à l'intérieur du corps creux ; (iv) en option au moins un dispositif de fermeture amovible (6), pour assurer l'étanchéité à au moins une extrémité ouverte,
dans lequel
le corps creux (1) comprend en outre soit un matériau matriciel solide, soit au moins une barrière supplémentaire (5),
chaque corps creux (1) ayant une entrée (2) et une sortie (3), au moins une barrière (5), placée voisine d'au moins l'un des éléments perméables aux liquides (4), au moins un élément perméable aux liquides est une fritte poreuse, placé(e) au-dessus de la sortie (3)
**caractérisé en ce**
**que** l'au moins une barrière (5) devient poreuse en étant microperforée par la fritte poreuse lorsqu'une force externe est appliquée au dispositif.

2. Dispositif selon la revendication 1, comprenant (i) au moins un corps creux, chaque corps creux (1) ayant au moins un dispositif de fermeture amovible (6), pour assurer l'étanchéité de l'entrée (2) et / ou de la sortie (3) du corps creux et (v) en option au moins un tube collecteur, pour collecter une phase mobile (éluat), après avoir passé la sortie (3).

3. Dispositif selon la revendication 1 ou 2, mise en oeuvre comprenant plus d'une barrière (5), de préférence 2, 3, 4, 5 ou 6 barrières (5), qui séparent le corps creux (1) en plus de deux compartiments.

4. Dispositif selon l'une quelconque des revendications 1 à 3,
**caractérisé en ce**
**que** les barrières (5) sont sélectionnées individuellement dans un groupe se composant d'un film, d'une feuille, d'un revêtement, d'une cloison, d'un matériau fritté hydrophobe formant membrane ou d'un matériau fibreux hydrophobe.

5. Dispositif selon l'une quelconque des revendications 1 à 4,
**caractérisé en ce que**
le corps creux (1) est au moins partiellement cylindrique ou conique.

6. Dispositif selon la revendication 5, représentant un tube de réaction, une coupelle de réaction, un tube collecteur, un conteneur collecteur, un corps de colonne, une colonne de centrifugation, un tube de centrifugation, des tubes de microcentrifugation, en particulier des conteneurs compartimentés tels que des tubes, des coupelles, des flacons, des colonnes chromatographiques, des colonnes de centrifugation, des seringues en plastique, des plaques multi-puits, des blocs multi-puits, des plaques formant colonnes multi-puits, des flacons, des bouteilles, des coupelles, des fioles, des récipients collecteurs ou des récipients de centrifugation.

7. Dispositif selon l'une quelconque des revendications 1 à 6,
**caractérisé en ce que**
le matériau formant barrière (5) devient poreux en appliquant une pression, une force de traction ou une puissance motrice.

8. Utilisation d'un dispositif selon l'une quelconque des revendications 1 à 7, pour le recueil, le stockage ou le traitement d'un échantillon contenant du liquide ou pour le recueil, le stockage ou le traitement ou l'isolation d'une biomolécule ou d'échantillons contenant des biomolécules, de préférence pour isoler et / ou purifier une biomolécule d'un échantillon liquide.

9. Utilisation d'un dispositif selon l'une quelconque des revendications 1 à 7, pour la séparation de phases d'un système liquide / solide à phases multiples ou d'un système liquide à phases multiples.

10. Procédé de préparation d'un dispositif selon l'une quelconque des revendications 1 à 7, comprenant l'opération, consistant à
placer au moins une barrière (5), qui est non perméable aux liquides et aux solides dans des conditions ambiantes mais devient perméable aux liquides de manière irréversible en devenant poreuse, en appliquant une force externe à ladite barrière (5), dans un corps creux d'une manière telle que, à l'intérieur du corps creux, éloigné d'au moins une extrémité ouverte, une barrière (5) est obtenue, séparant le corps creux (1) en au moins deux compartiments, comprenant en outre l'opération, consistant à placer au moins un élément perméable aux liquides (4), qui est une fritte poreuse, dans le corps creux (1).

11. Procédé d'isolation ou de purification d'au moins une biomolécule intéressante d'un échantillon, comprenant au moins un type de biomolécules, comprenant les opérations, consistant à
a. placer l'échantillon à l'intérieur d'un premier compartiment du corps creux (1) d'un dispositif selon l'une quelconque des revendications 1 à 7, comprenant au moins deux compartiments, séparés par au moins une barrière non perméable aux liquides (5), dans lequel soit l'échantillon est un échantillon liquide, soit l'échantillon est touché par un liquide quelconque avant ou après le placement de l'échantillon à l'intérieur du corps creux, soit le corps creux comprend un liquide qui vient en contact avec l'échantillon, lorsque ledit échantillon est placé dans le dispositif,
b. faire incuber en option l'échantillon à l'intérieur du premier échantillon du corps creux (1),
c. appliquer une force externe, de préférence une pression, une force de traction ou une puissance motrice à la barrière (5), résultant en ce qu'une première barrière (5) devient perméable aux liquides de manière irréversible et que le liquide est transféré dans un compartiment supplémentaire du corps creux (1),
d. faire incuber en option l'échantillon à l'intérieur du compartiment supplémentaire du corps creux (1),
e. appliquer une force externe à une barrière (5) suivante, résultant en ce que ladite barrière (5) devient perméable aux liquides de manière irréversible et que le liquide est transféré dans un compartiment supplémentaire du corps creux (1),
f. recueillir un éluat comprenant la biomolécule intéressante.

12. Procédé selon la revendication 11, dans lequel le corps creux (1) du dispositif comprend 2, 3, 4, 5 ou 6 barrières (5), résultant en 3, 4, 5, 6 ou 7 compartiments du corps creux (1) et les étapes (d) et / ou (e) sont répétées aussi souvent que nécessaire pendant un processus d'isolation ou de purification, pour surmonter toutes les barrières (5) contenues et pour obtenir un éluat contenant la biomolécule intéressante.

13. Procédé selon la revendication 11 ou 12, dans lequel au moins l'un des compartiments du corps creux (1) du dispositif comprend en outre une matrice solide et / ou au moins un liquide avant que la biomolécule, contenant l'échantillon, ne soit ajoutée.

14. Procédé selon l'une quelconque des revendications 11 à 13, dans lequel la force externe appliquée au cours de l'étape (c) et la ou les force(s) externe(s), appliquées au cours de la ou des étapes répétée(s) (e) en option, diffèrent l'une de l'autre soit en intensité de la force, soit quant au type de force, de préférence l'intensité du même type de force croît étape par étape, soit le type de force est modifié, résultant en ce que les barrières (5) deviennent perméables aux liquides de manière séquentiellement irréversible.

15. Ensemble, destiné à recueillir, stocker ou traiter un échantillon biologique ou à isoler une biomolécule d'un échantillon biologique, comprenant un dispositif selon l'une quelconque des revendications 1 à 7.
